# EUROPEAN PATENT APPLICATION

(11) **EP 4 614 934 A1**
(43) Date of publication of application: **10.09.2025**
(21) Application number: 23893156.2
(22) Date of filing: 29.06.2023
(51) Int. Cl.: H04L 47/10

(54) **TRAFFIC SCHEDULING METHOD AND APPARATUS, AND DEVICE CLUSTER AND COMPUTER-READABLE STORAGE MEDIUM**

(30) Priority: 21.11.2022 CN 202211473367; 17.01.2023 CN 202310065248
(71) Applicant: Huawei Cloud Computing Technologies Co., Ltd., Guiyang, Guizhou 550025 (CN)
(72) Inventor: REN, Hai, Guiyang, Guizhou 550025 (CN); ZHANG, Jie, Guiyang, Guizhou 550025 (CN); ZHENG, Qifeng, Guiyang, Guizhou 550025 (CN)
(74) Representative: Goddar, Heinz J.
(86) International application number: PCT/CN2023/104095
(87) International publication number: WO 2024/109056

(57) **Abstract**

This application discloses a traffic scheduling method and apparatus, a device cluster, and a computer-readable storage medium, and pertains to the field of communication technologies. The method includes: A scheduling device obtains to-be-scheduled traffic, and divides the traffic into a plurality of traffic blocks; then determines a computing requirement of each traffic block; and schedules, based on the computing requirement of each traffic block, each traffic block to a target node corresponding to each traffic block. A computing resource of the target node is used to process a service of the traffic block corresponding to the target node, the computing resource of the target node is further used to process another service different from the traffic block, and the another service is also scheduled by the scheduling device to the target node. One scheduling device schedules traffic or another service to a target node, and one scheduling device allocates a computing resource of the target node to a traffic service and the another service, thereby improving rationality of computing resource allocation, avoiding a waste and overload use of the computing resource, and improving resource utilization.

## Description

This application claims priorities to Chinese Patent Application No. 202211473367.6, filed on November 21, 2022 and entitled "EDGE CLOUD RESOURCE CONVERGED SCHEDULING METHOD, APPARATUS, DEVICE, AND READABLE STORAGE MEDIUM", and to Chinese Patent Application No. 202310065248.5, filed on January 17, 2023 and entitled "TRAFFIC SCHEDULING METHOD AND APPARATUS, DEVICE CLUSTER, AND COMPUTER-READABLE STORAGE MEDIUM", both of which are incorporated herein by reference in their entireties.

### TECHNICAL FIELD

This application relates to the field of communication technologies, and in particular, to a traffic scheduling method and apparatus, a device cluster, and a computer-readable storage medium.

### BACKGROUND

A computing node is a platform for processing service data. The computing node can provide computing resources such as a bandwidth, a central processing unit (central processing unit, CPU), and a memory to support a plurality of types of services. The computing node is, for example, an edge node close to a service data source, and the services supported by the computing node are, for example, a traffic service and a computing service. The traffic service is a service of processing, by using the computing resource of the computing node, traffic scheduled to the computing node. The computing service is a service of running a scheduled computing unit such as a container and a virtual machine by using the computing resource of the computing node. Before the computing node processes the traffic service and the computing service, the traffic or the computing service further needs to be scheduled to the computing node.

### SUMMARY

This application provides a traffic scheduling method and apparatus, a device cluster, and a computer-readable storage medium, to schedule traffic to a computing node. Technical solutions are as follows:

According to a first aspect, a traffic scheduling method is provided, where the method is performed by a scheduling device that provides a cloud service. The method includes: The scheduling device obtains to-be-scheduled traffic, and divides the traffic into a plurality of traffic blocks. Then, the scheduling device determines a computing requirement of each traffic block; and schedules, based on the computing requirement of each traffic block, each traffic block to a target node corresponding to each traffic block. A computing resource of the target node may be used to process a service of the traffic block corresponding to the target node, the computing resource of the target node may be further used to process another service different from the traffic block, and the another service is also scheduled by the scheduling device to the target node.

The traffic is divided into the plurality of traffic blocks, and then the computing requirement of each traffic block is determined, so that traffic scheduling and scheduling of the another service can be completed by one scheduling device. The scheduling device has a general scheduling capability. Because the scheduling device can schedule both the traffic and the another service, a same scheduling device allocates the computing resource of the target node to a traffic service and the another service, thereby improving rationality of computing resource allocation, avoiding a waste and overload use of a computing resource of a computing node, and improving resource utilization of the computing resource.

In a possible implementation, the obtaining to-be-scheduled traffic includes: The scheduling device obtains resource usage of each of a plurality of computing nodes; and when resource usage of any computing node in the plurality of computing nodes indicates that the any computing node is abnormal, uses, as the to-be-scheduled traffic, traffic carried on the any computing node, where the any computing node and the target node are different computing nodes. The traffic carried on any computing node that is abnormal is scheduled to another computing node, to implement traffic sharing of the any computing node, and a computing resource that is on the any computing node and that is occupied by the traffic is released, thereby avoiding a case in which a service carried on the any computing node is damaged due to computing resource overload.

In a possible implementation, before the traffic carried on the any computing node is used as the to-be-scheduled traffic based on that the resource usage of the any computing node in the plurality of computing nodes indicates that the any computing node is abnormal, the method further includes: determining, based on at least one of the following: the resource usage of the any computing node indicates that a size of traffic exceeds a first threshold of the any computing node, or usage of a data processing unit of the any computing node exceeds a second threshold of the any computing node, that the any computing node is abnormal. A manner of determining that the any computing node is abnormal is not limited. Flexibility is high.

In a possible implementation, the dividing the traffic into a plurality of traffic blocks includes: determining a reference quantity according to a parsing protocol corresponding to the traffic; and dividing traffic in a same region into the reference quantity of traffic blocks. The reference quantity is determined according to the parsing protocol, to make a traffic division process more accurate.

In a possible implementation, the determining a computing requirement of each of the plurality of traffic blocks includes: obtaining a node region requirement and a computing resource requirement of each traffic block, and using the node region requirement and the computing resource requirement as the computing requirement. The determined computing requirement not only limits a computing resource required by the traffic block, but also limits a region of a node to which the traffic block needs to be scheduled. Accuracy of the obtained computing requirement is high.

In a possible implementation, the obtaining a node region requirement of each traffic block includes: constructing a region label corresponding to each traffic block, where the region label corresponding to the traffic block indicates a region in which a computing node corresponding to the traffic block is located; and using an affinity relationship between each traffic block and the region label corresponding to each traffic block as the node region requirement of each traffic block, where the affinity relationship is used to determine a region to which the traffic block needs to be scheduled. The node region requirement of the traffic block can be described by using the region label and the affinity relationship. The node region requirement is simple, and an operation of selecting the target node based on the simple node region requirement is simple and more convenient.

In a possible implementation, the region label includes at least one of an area label and an operator label. A type of region label and a quantity of region labels are not limited in this application. Universality is high.

In a possible implementation, the computing resource requirement includes at least one of a bandwidth requirement, a memory requirement, and a data processing unit requirement. A memory processing unit is, for example, a CPU. The computing resource requirement may include a plurality of types of data. Flexibility is high.

In a possible implementation, when the computing requirement of each traffic block includes the node region requirement and the computing resource requirement, the scheduling, based on the computing requirement of each traffic block, each traffic block to a target node corresponding to each traffic block includes: for any traffic block, screening a schedulable computing node based on a computing requirement of the any traffic block, to obtain a selected computing node, where resource usage of the selected computing node meets a computing resource requirement of the any traffic block, and region information of the selected computing node meets a node region requirement of the any traffic block; selecting a computing node from the selected computing node as a target node corresponding to the any traffic block; and scheduling the any traffic block to the target node corresponding to the any traffic block. The target node selected from the selected computing node may meet the computing resource requirement and the node region requirement of the any traffic block, to ensure that after the any traffic block is scheduled to the target node, a service of the any traffic block can be successfully processed on the target node.

In a possible implementation, the another service includes at least one of a computing service and a storage service. The another service scheduled by the scheduling device is not limited. Universality is high, and an application scope is large.

In a possible implementation, the target node is an edge node. The target node used to process the traffic service is an edge node close to a service data source. This shortens a distance between the target node and the service data source, shortens a transmission distance between traffic on the service data source and the target node, reduces traffic transmission time, and effectively increases a response speed and a connection speed of the target node to the traffic.

According to a second aspect, a traffic scheduling apparatus is provided, where the apparatus is used in a scheduling device that provides a cloud service. The apparatus includes: a division module, configured to: obtain to-be-scheduled traffic, and divide the traffic into a plurality of traffic blocks; a determining module, configured to determine a computing requirement of each of the plurality of traffic blocks; and a scheduling module, configured to schedule, based on the computing requirement of each traffic block, each traffic block to a target node corresponding to each traffic block, where a computing resource of the target node is used to process a service of the traffic block corresponding to the target node, and the computing resource of the target node is further used to process another service that is different from the traffic block and that is scheduled by the scheduling device.

In a possible implementation, the division module is configured to: obtain resource usage of each of a plurality of computing nodes; and use, as the to-be-scheduled traffic based on that resource usage of any computing node in the plurality of computing nodes indicates that the any computing node is abnormal, traffic carried on the any computing node, where the any computing node and the target node are different computing nodes.

In a possible implementation, the determining module is further configured to determine, based on at least one of the following: the resource usage of the any computing node indicates that a size of traffic exceeds a first threshold of the any computing node, or usage of a data processing unit of the any computing node exceeds a second threshold of the any computing node, that the any computing node is abnormal.

In a possible implementation, the division module is configured to: determine a reference quantity according to a parsing protocol corresponding to the traffic; and divide traffic in a same region into the reference quantity of traffic blocks.

In a possible implementation, the determining module is configured to: obtain a node region requirement and a computing resource requirement of each traffic block, and use the node region requirement and the computing resource requirement as the computing requirement.

In a possible implementation, the determining module is configured to: construct a region label corresponding to each traffic block, where the region label corresponding to the traffic block indicates a region in which a computing node corresponding to the traffic block is located; and use an affinity relationship between each traffic block and the region label corresponding to each traffic block as the node region requirement of each traffic block, where the affinity relationship is used to determine a region to which the traffic block needs to be scheduled.

In a possible implementation, the region label includes at least one of an area label and an operator label.

In a possible implementation, the computing resource requirement includes at least one of a bandwidth requirement, a memory requirement, and a data processing unit requirement.

In a possible implementation, the computing requirement of each traffic block includes the node region requirement and the computing resource requirement, and the scheduling module is configured to: for any traffic block, screen a schedulable computing node based on a computing requirement of the any traffic block, to obtain a selected computing node, where resource usage of the selected computing node meets a computing resource requirement of the any traffic block, and region information of the selected computing node meets a node region requirement of the any traffic block; select a computing node from the selected computing node as a target node corresponding to the any traffic block; and schedule the any traffic block to the target node corresponding to the any traffic block.

In a possible implementation, the another service includes at least one of a computing service and a storage service.

In a possible implementation, the target node is an edge node.

According to a third aspect, a computing device cluster is provided. The computing device cluster includes at least one computing device, and each computing device includes a processor and a storage. The processor of the at least one computing device is configured to execute instructions stored in the storage of the at least one computing device, to enable the computing device cluster to perform any traffic scheduling method in the first aspect.

According to a fourth aspect, a computer-readable storage medium is provided. The computer-readable storage medium includes computer program instructions, and when the computer program instructions are executed by a computing device cluster, the computing device cluster performs any traffic scheduling method in the first aspect.

According to a fifth aspect, a computer program (product) including instructions is provided. When the instructions are run by a computing device cluster, the computing device cluster is enabled to perform any traffic scheduling method in the first aspect.

According to a sixth aspect, a communication apparatus is provided. The apparatus includes a transceiver, a storage, and a processor. The transceiver, the storage, and the processor communicate with each other through an internal connection path. The storage is configured to store instructions. The processor is configured to execute the instructions stored in the storage, to control the transceiver to receive a signal, and control the transceiver to send a signal. In addition, when the processor executes the instructions stored in the storage, the processor is enabled to perform the method in any one of the first aspect or the possible implementations of the first aspect.

Optionally, there are one or more processors, and there are one or more storages.

Optionally, the storage and the processor may be integrated together, or the storage and the processor may be separately disposed.

In a specific implementation process, the storage may be a non-transitory (non-transitory) storage, for example, a read-only memory (read-only memory, ROM). The storage and the processor may be integrated on a same chip, or may be separately disposed on different chips. A type of the storage and a manner of disposing the storage and the processor are not limited in this application.

According to a seventh aspect, a chip is provided, and includes a processor, configured to: invoke instructions from a storage and run the instructions stored in the storage, to enable a communication device in which the chip is installed to perform the methods in the foregoing aspects.

According to an eighth aspect, another chip is provided, and includes an input interface, an output interface, a processor, and a storage. The input interface, the output interface, the processor, and the storage are connected through an internal connection path. The processor is configured to execute code in the storage. When the code is executed, the processor is configured to perform the methods in the foregoing aspects.

It should be understood that for beneficial effects achieved by the technical solutions and the corresponding possible implementations of the second aspect to the eighth aspect of this application, refer to the technical effects of the first aspect and the corresponding possible implementations thereof. Details are not described herein again.

### BRIEF DESCRIPTION OF DRAWINGS

FIG. 1 is a diagram of an implementation environment according to an embodiment of this application;
FIG. 2 is a flowchart of a traffic scheduling method according to an embodiment of this application;
FIG. 3 is another flowchart of a traffic scheduling method according to an embodiment of this application;
FIG. 4 is a diagram of a structure of a traffic scheduling apparatus according to an embodiment of this application;
FIG. 5 is a diagram of a structure of a computing device according to an embodiment of this application; and
FIG. 6 is a diagram of connection of computing devices according to an embodiment of this application.

### DESCRIPTION OF EMBODIMENTS

Terms used in implementations of this application are merely used to explain specific embodiments of this application, but are not intended to limit this application. To make objectives, technical solutions, and advantages of this application clearer, the following further describes the implementations of this application in detail with reference to accompanying drawings.

A computing node is a platform for processing service data by using computing resources such as a bandwidth, a CPU, and a memory. With development of communication technologies, construction of the computing node that provides a cloud service is increasingly mature, increasingly more services are implemented based on the computing node, and the services carried on the computing node also start to evolve to being diversified. The computing node is, for example, an internet data center (internet data center, IDC) node existing in a content delivery network (content delivery network, CDN). When the computing node is configured close to a service data source, the computing node may also be referred to as an edge node.

In a possible case, a computing node may not only provide a computing resource required for processing a traffic service, to implement bearing of the traffic service, but also provide a computing resource required for processing a computing service. It can be learned that computing resources of a same computing node need to be allocated to different services. In a multi-service scenario, a computing resource conflict and computing resource content may exist, and consequently, online service quality of the computing node is damaged. Embodiments of this application provide a traffic scheduling method, to properly schedule traffic to a computing node, so that computing resources of the computing node are properly allocated.

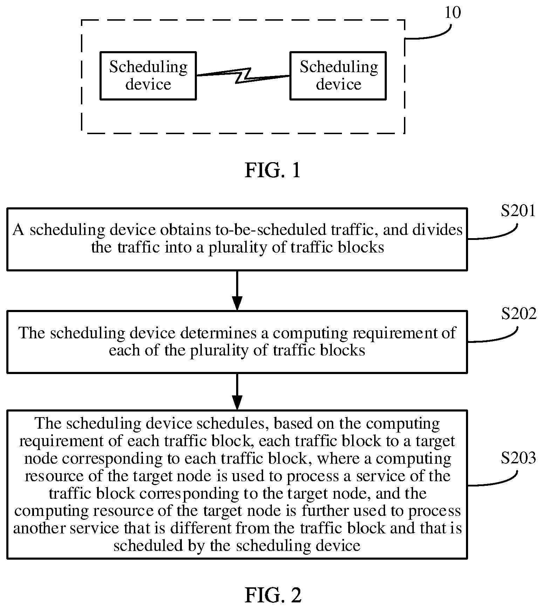

FIG. 1 is a diagram of an implementation environment of a traffic scheduling method according to an embodiment of this application. The implementation environment is a computing device cluster 10. The computing device cluster 10 includes at least one scheduling device configured to provide a cloud service, and scheduling devices may be communicatively connected in a wired or wireless network manner. Optionally, the traffic scheduling method may be independently performed by one scheduling device, or may be performed through interaction by a plurality of scheduling devices included in the computing device cluster 10. A quantity of scheduling devices included in the computing device cluster 10 is not limited in this embodiment of this application. In FIG. 1, two scheduling devices are used merely as an example for description. In addition, in addition to performing the traffic scheduling method provided in embodiments of this application, that is, scheduling a traffic block to a target node corresponding to the traffic block, the computing device cluster 10 in FIG. 1 may further schedule another service to a target node corresponding to the another service. That is, the computing device cluster 10 performs converged scheduling of scheduling a traffic service and the another service.

For example, the scheduling device included in the computing device cluster 10 may be a server, for example, a central server, an edge server, or a local server in a local data center. The server may be a physical server, or may be a cloud server that provides a cloud computing service. In some embodiments, the scheduling device included in the computing device cluster 10 may alternatively be a terminal device like a desktop computer, a notebook computer, or a smartphone involved in the cloud service.

An embodiment of this application provides a traffic scheduling method. The traffic scheduling method may be applied to the implementation environment shown in FIG. 1. The method may be performed by the scheduling device included in the computing device cluster 10. A flowchart of the method is shown in FIG. 2, and S201 to S203 are included.

S201: A scheduling device obtains to-be-scheduled traffic, and divides the traffic into a plurality of traffic blocks.

For example, the to-be-scheduled traffic is generated based on an access request, and the to-be-scheduled traffic needs to be processed by using a computing node. For example, a user from a region requests to access a website A, and the scheduling device receives traffic based on the access request of the user.

The foregoing is an example of the to-be-scheduled traffic. The scheduling device may receive the traffic generated based on the access request of the user, and use, as the to-be-scheduled traffic, the traffic generated based on the access request of the user, or may use, as the to-be-scheduled traffic, traffic allocated to another computing node. Optionally, the scheduling device obtains resource usage of each of a plurality of computing nodes; and uses, as the to-be-scheduled traffic based on that resource usage of any computing node in the plurality of computing nodes indicates that the any computing node is abnormal, traffic carried on the any computing node. The any computing node and the target node are different computing nodes.

The resource usage is used to describe usage of a computing resource of the computing node, and the scheduling device may determine, based on the usage of the computing resource, whether the computing node is abnormal. Based on that a computing resource provided by a computing node includes a bandwidth, a memory, a data processing unit, and the like, the scheduling device may alternatively determine, based on the resource usage in the following two manners, but not limited thereto, whether the computing node is abnormal.

Determining manner 1: Determine, based on that the resource usage of the any computing node indicates that a size of traffic exceeds a first threshold of the any computing node, that the any computing node is abnormal.

A bandwidth of a single computing node is limited, and the bandwidth determines a maximum value of traffic that can be circulated on the computing node. Therefore, traffic that can be carried on one computing node is also limited, and the traffic carried on the computing node needs to be controlled. Optionally, a communication connection is established between the any computing node and the scheduling device, and the scheduling device may receive, based on the communication connection, a size of traffic that is carried on the any computing node and that is sent by the any computing node. The scheduling device collects statistics on the size of the traffic carried on the any computing node, compares the size of the traffic with the first threshold of the any computing node, and determines, based on a comparison result, whether the traffic carried on the any computing node exceeds a load capability. When the size of the traffic is greater than the first threshold, to be specific, the traffic carried on the any computing node exceeds the load capability, it is determined that the any computing node is abnormal.

The first threshold is any value specified based on experience, and a unit of the first threshold is consistent with a unit of the traffic. In a possible case, when setting the first threshold, the scheduling device further refers to a maximum value of traffic that can be circulated on the computing node, for example, uses the maximum value of the traffic as the first threshold, to ensure full utilization of the computing resource of the computing node. Alternatively, a computing result obtained by multiplying the maximum value of the traffic by 90% is used as the first threshold, and the traffic is scheduled to another computing node when the traffic does not reach a carrying upper limit of the computing node. This ensures that the computing node can operate normally during traffic scheduling by the scheduling device, to avoid a case in which a traffic service of the computing node is damaged. In addition, different computing nodes may correspond to a same first threshold or different first thresholds. "Different" may be partially different or completely different.

Determining manner 2: Determine, based on that the resource usage of the any computing node indicates that usage of a data processing unit exceeds a second threshold of the any computing unit, that the any computing node is abnormal.

The data processing unit may be a CPU, or may be another unit that supports data processing and program running. Similar to the first threshold, the second threshold is also any value specified based on experience. For example, the second threshold is set to 80% or 90%. Similarly, different computing nodes may correspond to a same second threshold or different second thresholds. This is not limited in this embodiment of this application. The scheduling device receives the usage that is of the data processing unit and that is uploaded by the any computing node, to obtain the resource usage of the any computing node, and compares the usage of the data processing unit with the second threshold, to determine whether the any computing node is abnormal.

The scheduling device may select any one of the foregoing methods to determine whether the any computing node is abnormal, and the scheduling device may further choose to determine an abnormality with reference to the foregoing two methods. In other words, when one computing node provides a plurality of types of computing resources, each type of computing resource has a corresponding threshold. The scheduling device compares usage that is of each computing resource and that is included in the resource usage with the corresponding threshold of each computing resource, to determine whether the any computing node is abnormal. Optionally, the scheduling device includes a service perception module, configured to perform the foregoing operations of obtaining the resource usage and determining, based on the resource usage, whether the any computing node is abnormal.

In addition to determining, based on the usage of the computing resource, an abnormality in the foregoing examples, the scheduling device may further collect statistics on remaining usage of the computing resource to determine an abnormality. For example, statistics on remaining usage of the data processing unit is collected, and it is determined, based on that the remaining usage is less than or equal to a reference threshold specified based on experience, that the any computing node is abnormal. In addition, in addition to the data processing unit and the traffic shown in the foregoing embodiments, the computing resource used to determine whether an abnormality occurs may alternatively be another computing resource including the bandwidth. Therefore, it is alternatively determined, based on that bandwidth usage of the any computing node exceeds a third threshold specified based on experience, that the any computing node is abnormal.

It may be understood that determining, based on the resource usage, that the any computing node is abnormal means that a service carried on the any computing node exceeds the load capability. Therefore, the scheduling device needs to schedule, to another node in a timely manner, traffic carried on the any computing node that is abnormal, to allocate the traffic service and release the computing resource, avoid a case in which the service carried on the any computing node is damaged due to workloads of the computing node, and ensure that the any computing node provides a high-quality service.

In addition, the any computing node carries a plurality of types of services, for example, a computing resource of the any computing node is further used to support running that is of a computing unit and that is involved in a computing service, in addition to traffic parsing involved in the traffic service. However, when releasing the computing resource of the any computing node, the scheduling device still chooses to schedule the traffic carried on the any computing node to another computing node. A reason is that in comparison with a requirement of the traffic service for the computing service, a requirement of the computing service for the computing resource is fixed. An example in which a computing unit of the computing service is a container is used. When a container is allocated to each computing node, computing resource occupation of the container is determined, and is limited and controllable. For example, it is clearly known that one container needs to occupy 10 CPUs. However, the requirement of the traffic service for the computing resource changes with time. For example, during evening peak hours from 20:00 to 22:00, as a quantity of persons watching videos and browsing websites increases, generated traffic also increases, and traffic that needs to be carried on a single computing node increases. This causes computing resource loads. Because traffic is a main reason why the computing node is abnormal, adjusting the traffic carried on the computing node can effectively resolve the computing resource loads.

According to the foregoing principle, after detecting that the any computing node is abnormal, the scheduling device extracts the traffic carried on the any computing node and uses the traffic as the to-be-scheduled traffic. Then, standardization processing starts to be performed on the to-be-scheduled traffic, so that processed traffic belongs to a standardized service object as the computing unit, and traffic scheduling and scheduling of another service including the computing service can be completed by a same scheduling device. The standardized service object means that the service object can be described by using a unified description unit. For example, for standardized traffic, a computing requirement can be described by using a unified description unit, and for a standardized computing unit, a computing capability of the computing unit can be described by using a unified description unit.

The foregoing is a reason why the scheduling device needs to perform standardization processing on the traffic. The following describes a process in which the scheduling device performs standardization processing on the traffic. For example, the scheduling device determines a reference quantity according to a parsing protocol corresponding to the traffic; and divides traffic in a same region into the reference quantity of traffic blocks. In a possible implementation, the scheduling device schedules the traffic to the computing node according to the parsing protocol. The scheduling device determines, based on an access request carried in the traffic and according to the parsing protocol, an internet protocol (internet protocol, IP) address corresponding to the access request, and determines, by combining a plurality of factors such as the resource usage of each computing node, a computing node to which the traffic needs to be scheduled. The parsing protocol used to parse the traffic is a parsing protocol corresponding to the to-be-scheduled traffic. The parsing protocol is, for example, a domain name system (domain name system, DNS) protocol, or may be another protocol.

When an IP address corresponding to an access status is determined according to the parsing protocol, due to a limitation of a local (Local) DNS of an operator, each DNS packet may include a largest quantity of N IP addresses, where N is a positive integer. In this case, the reference quantity is determined according to the parsing protocol, that is, N corresponding to the parsing protocol is determined as the reference quantity. Because N reflects a largest quantity of traffic blocks into which the traffic can be divided, N is used as the reference quantity, and the scheduling device further divides the to-be-scheduled traffic into the reference quantity of traffic blocks, to implement division of the to-be-scheduled traffic at a finest granularity. This effectively controls a size of the traffic block, and improves scheduling efficiency of subsequently scheduling a traffic block. For example, a division process may be an equal division process. For example, if a size of traffic in a same region is 200 gigabytes (gigabyte, G), and N is 10, sizes of 10 obtained traffic blocks are all 20G.

In a possible case, the divided traffic belongs to a same region, and domain names to which the traffic is used to request access are also the same. A region to which the traffic belongs is determined based on a region when the user requests access. The region may be determined based on at least one of a province and an operator. For example, if a user from an area requests access by using an operator, a region to which traffic generated based on the access request belongs is an area and an operator.

Areas can be divided based on provinces. For example, Hebei belongs to an area, and Anhui belongs to another area. In this case, Hebei and an operator A belong to a region, and Anhui and the operator A belong to another region. Areas may alternatively be divided and determined based on region units such as cities or districts. For example, Chaoyang District belongs to an area, and Haidian District belongs to another area. In this case, Chaoyang District and an operator A belong to a region, and Haidian District and the operator A belong to another region. Certainly, the region may be a region in China, or may be a region outside China. Region division outside China is similar to region division in China. For details, refer to related descriptions. Details are not described. It should be further noted that, determining the region based on the area and the operator is intended to describe a concept of the region by using examples, instead of limiting a manner of dividing the region. The region to which the traffic belongs may also be divided in more other manners.

Traffic is sticky. To be specific, traffic that is in a region and that is used to request access to a domain name does not increase sharply within short time. A reference quantity during traffic division is also constant. Therefore, it may be considered that a size of a traffic block obtained by dividing, within reference time, traffic that is in a region and that is used to request a domain name is unchanged, in other words, a change amplitude of the size of the traffic block does not exceed an error threshold specified based on experience. The reference time is time specified based on experience, for example, the reference time is five minutes. It should be understood that the reference time is used for description in this application to indicate that a size of a single traffic block is stable within short time, but not to limit stable time of the single traffic block. In some cases, the stable time of the single traffic block may be longer or shorter.

Because the size of the traffic block is stable within the reference time, a computing resource required by the computing node to process the traffic block is also stable. In other words, after the traffic is divided into blocks, the obtained traffic blocks may be analogous to computing units such as network pods (pods) or virtual machines (virtual machines, VMs). The scheduling of the traffic block may be classified into a same type as scheduling of the computing service and the like in a scenario perspective. In this application, scheduling of the traffic block and scheduling of another service like the computing service can be performed by a same scheduling device.

S202: The scheduling device determines a computing requirement of each of the plurality of traffic blocks.

A process in which the scheduling device determines the computing requirement of the traffic block includes but is not limited to: obtaining a node region requirement and a computing resource requirement of each traffic block, and using the node region requirement and the computing resource requirement as the computing requirement. In a possible implementation, based on a network link limitation or a traffic transmission limitation, each traffic block has a node region requirement for the computing node. A process in which the scheduling device determines the node region requirement includes but is not limited to: constructing a region label corresponding to each traffic block, where the region label corresponding to the traffic block indicates a region in which a computing node corresponding to the traffic block is located; and using an affinity relationship between each traffic block and the region label corresponding to each traffic block as the node region requirement of each traffic block, where the affinity relationship is used to determine a region to which the traffic block needs to be scheduled.

In a possible implementation, the scheduling device constructs the region label corresponding to the traffic block based on at least one of a network link limitation or a traffic transmission limitation. For a case in which the region is determined based on at least one of the area and the operator, the region label also includes at least one of an area label and an operator label. A traffic block A is used as an example. A constructed region label is: area label: Beijing; and operator label: operator A. Certainly, the region label may further include a node name. For example, in addition to the foregoing two examples, the constructed region label for the traffic block A further includes: node name: computing node A.

The region label constructed by the scheduling device for the traffic block may indicate the region to which the traffic block needs to be scheduled, or may indicate a region to which the traffic block cannot be scheduled. In other words, there is the affinity relationship between the traffic block and the region label. When the affinity relationship between the traffic block and the region label is affinity, it indicates that the traffic block is expected to be scheduled to a region indicated by the region label. The region label corresponding to the traffic block A is still used as an example. In a traffic scheduling process, a service has a requirement of local province coverage, that is, traffic of a local province needs to be scheduled to a node of the local province, and cross-operator coverage is not allowed. The scheduling requirement of the local province coverage may be expressed by using the affinity, and an obtained expression result is: affinity: area label==Beijing; and affinity: operator label==operator A.

When the affinity relationship between the traffic block and the region label is anti-affinity, it indicates that the traffic block is not expected to be scheduled to a region indicated by the region label. The region label corresponding to the traffic block A is still used as an example. The computing node A is a computing node on which the traffic block A is originally carried. Because the scheduling device needs to schedule the traffic block A to a target node other than the computing node A, the traffic block A is not expected to be scheduled to the computing node A. This scheduling requirement is expressed, by using affinity, as: anti-affinity: node name!=computing node A. Certainly, the node name included in the node region requirement may alternatively refers to a computing node to which the traffic block is expected to be scheduled, that is, the affinity relationship between the node name and the traffic block may be affinity in addition to the anti-affinity in the foregoing example.

Then, the scheduling device may use, as the node region requirement of the traffic block, the result expressed by using the affinity relationship. To be specific, a node region requirement of the traffic block A that is obtained by the scheduling device is: affinity: area label==Beijing; affinity: operator label=operator A; and anti-affinity: node name!=computing node A.

In addition to a limitation of a traffic block on a region, a computing resource required for processing the traffic block needs to be further considered for scheduling the traffic block to the computing node. Therefore, the scheduling device further needs to collect statistics on a computing resource requirement of the traffic block. Corresponding to a case in which the computing resource includes at least one of the bandwidth, the data processing unit, and the memory, the computing resource requirement includes at least one of a bandwidth requirement, a memory requirement, and a data processing unit requirement. An example in which the traffic block is the traffic block A, and the data processing unit is the CPU is still used. A computing resource requirement of the traffic block A is: bandwidth: 10G; and CPU: one core. Therefore, the scheduling device obtains the computing requirement including the computing resource requirement and the node region requirement.

Base on the foregoing operations, the scheduling device may use the unified description unit to describe computing requirements of different traffic blocks, to implement standardization processing on the traffic blocks. A description unit of the traffic block is, for example, the area label, the operator label, the bandwidth, the CPU, and the size of the traffic block in the foregoing examples.

S203: The scheduling device schedules, based on the computing requirement of each traffic block, each traffic block to a target node corresponding to each traffic block, where a computing resource of the target node is used to process a service of the traffic block corresponding to the target node, and the computing resource of the target node is further used to process another service that is different from the traffic block and that is scheduled by the scheduling device.

In a possible case, the resource usage that is of each computing node and on which statistics is collected by the scheduling device is further used to determine whether the computing node can process a service of the traffic block. In addition, when determining the target node corresponding to the traffic block, in addition to based on the resource usage of each computing node, the scheduling device further obtains region information of each computing node, to be specific, a specific area in which the computing node is located and a specific operator to which the computing node belongs, and then determines the target node based on the region information of each computing node.

Because processes of scheduling different traffic blocks to corresponding target nodes based on the region information and the resource usage of the computing node are similar, an example in which any traffic block is scheduled to a target node corresponding to the any traffic block is used for description below. For a process of scheduling another traffic block, refer to related descriptions. Details are not described herein.

For example, the scheduling device screen a schedulable computing node based on a computing requirement of the any traffic block, to obtain a selected computing node, where resource usage of the selected computing node meets a computing resource requirement of the any traffic block, and region information of the selected computing node meets a node region requirement of the any traffic block; selects a computing node from the selected computing node as a target node corresponding to the any traffic block; and schedules the any traffic block to the target node corresponding to the any traffic block.

The schedulable computing node is a computing node that can normally process a service, and a computing resource on the schedulable computing node runs normally. For example, if a CPU on a computing node B runs abnormally, the computing node B does not belong to the schedulable computing node.

The scheduling device compares the node region requirement of the any traffic block with region information of the any computing node, and when an area in which the any computing node is located belongs to an area expected to be scheduled to in the node region requirement, and an operator to which the any computing node belongs is an operator expected to be scheduled to in the node region requirement, determines that the region information of the any computing node meets the node region requirement of the any traffic block. Certainly, if the node region requirement of the traffic block further specifies a computing node to which the traffic block is not expected to be scheduled, the scheduling device further compares, on the basis of comparing areas and operators of the any computing node and the traffic block, whether the any computing node is the computing node not expected to be scheduled to, and when the any computing node is not the computing node not expected to be scheduled to, determines that the region information of the any computing node meets the node region requirement of the any traffic block.

In a possible implementation, the scheduling device also performs standardization processing on the computing node. At least one of an area in which the computing node is located or an operator to which the computing node belongs is specified by constructing a region label corresponding to the computing node. The region label corresponding to the computing node is used as the region information, so that the region to which the computing node belongs is described by using the unified description unit. In this case, comparison between the node region requirement and the region information may be implemented by matching the region label corresponding to the traffic block with the region label corresponding to the computing node.

In addition, the scheduling device further determines, based on the resource usage, remaining usage of computing resources of the computing node, that is, a quantity of computing resources that can be provided by the computing node. The computing resource requirement of the any traffic block indicates a quantity of computing resources required by the any traffic block. The computing resource requirement of the any traffic block is compared with the resource usage of the any computing node. When the quantity that is of computing resources that can be provided by the computing node and that is indicated in the resource usage is not less than a quantity that is of required computing resources and that is indicated in the computing resource requirement of the any traffic block, it is determined that the resource usage of the any computing node meets the computing resource requirement of the any traffic block.

A computing node is screened based on two dimensions: the computing resource and the region information, to ensure that a selected computing node meets the computing requirement of the any traffic block. Then, the scheduling device selects a computing node from the selected computing node as the target node corresponding to the any traffic block. For a case in which there is one selected computing node, the scheduling device directly uses the selected computing node as the target node corresponding to the any traffic block. For a case in which there are a plurality of selected computing nodes, the scheduling device may randomly select a computing node as the target node corresponding to the any traffic block, or may determine, as the target node corresponding to the any traffic block based on resource usage of each computing node, a computing node whose computing resources are used least. Certainly, the scheduling device may alternatively select the target node according to another principle. This is not limited in this embodiment of this application.

Regardless of a specific manner in which the scheduling device determines the target node corresponding to the any traffic block, the scheduling device can schedule the any traffic block to the target node corresponding to the any traffic block. Optionally, a process in which the scheduling device schedules the any traffic block to the corresponding target node includes: determining a scheduling policy of the traffic block based on the target node corresponding to the traffic block; and the scheduling device sends the scheduling policy of the traffic block to a downstream device, where the downstream device is configured to schedule the traffic block according to the scheduling policy. The scheduling policy of the traffic block is used to describe a target node to which the traffic block is to be scheduled. For example, a scheduling policy of the traffic block A is that the traffic block A is to be scheduled to a computing node C. The downstream device is, for example, a DNS.

In addition, that the traffic is scheduled to the target node means that when the user subsequently requests access, the user may directly request to access the target node, and traffic generated based on the access request is directly sent to the target node without being sent to the scheduling device. In addition, when the access request of the user is used as the traffic, the scheduling policy delivered by the scheduling device to the DNS is escaped to a form of domain name+region+operator, and the scheduling policy is further used to request an IP address of the target node that is to be parsed to. In this case, a traffic scheduling process is that the DNS is responsible for parsing the scheduling policy and parsing access requests from users of different operators and in different regions to target nodes specified in the scheduling policy.

Based on this, the user may subsequently process the access request via the target node. The target node receives the access request of the user, uses a CPU to process the access request, and returns related data based on the access request of the user. For example, the target node parses the access request, and determines, based on the parsing, that a website requested by the user is the website A. Because a website interface of the website A is buffered in the target node, the target node may directly return the website interface of the website A to the user, so that the user accesses the website A. In addition to the website interface in the foregoing example, the related data returned to the user may alternatively be picture data, music data, video data, or the like requested by the user. The foregoing is an example in which the target node invokes the computing resource to process the traffic service. Based on that one computing node may support a plurality of types of services, in addition to processing the service of the traffic block, the computing resource of the target node may be further used to process the another service different from the traffic block. Optionally, the another service includes at least one of a computing service and a storage service.

For example, the another service processed by the target node is also scheduled by the scheduling device to the target node. In other words, the scheduling device further receives the another service, determines, based on a scheduling requirement of the another service, a target node corresponding to the another service, and schedules the another service to the target node corresponding to the another service.

When the another service has the scheduling requirement, the another to-be-scheduled service is sent to the scheduling device via a request device of the another service. An example in which the another to-be-scheduled service is the computing service is used. In this case, the another service submitted by the request device to the scheduling device is information about a to-be-scheduled computing unit. In a possible implementation, a scheduling request of the another service is triggered based on a service. For example, a new computing service needs to be enabled. The computing service requires 10 containers, and each container requires a two-core CPU and a 500-megabyte memory. The request device submits the information about the to-be-scheduled computing unit to the scheduling device, and therefore, the scheduling device receives a to-be-scheduled computing service. Alternatively, based on that a quantity of computing units on the computing node does not meet the computing requirement, a new computing unit further needs to be configured on the computing node. Each computing unit needs to occupy a 200-megabyte memory. The request device also sends, to the scheduling device, information about the computing unit that needs to be configured, and therefore, the scheduling device receives a to-be-scheduled computing service.

In a possible implementation, standardization processing is also performed on the another service sent by the request device to the scheduling device, to be specific, a computing capability of the computing service or a storage capability of a storage service is described by using the unified description unit. The computing unit of the computing service is used as an example to explain and describe standardization processing on the computing service. Computing units of different models have different computing capabilities. Some computing units may have a strong computing capability, and some computing units may have a weak computing capability. Therefore, the unified description unit needs to be used to describe the computing units. In addition, computing units of a same model may also have different computing capabilities, which may be caused by different use duration. For example, because a loss occurs due to a service life during use of a CPU of the computing unit, computing capabilities that can be carried on new and old computing units of a same model are different. Based on this case, a description unit also needs to be used to describe different computing capabilities of the computing units, to perform standardization processing on the computing units.

Regardless of a specific situation of the another service received by the scheduling device, after receiving the another to-be-scheduled service, the scheduling device may determine, based on a requirement of the another service for the computing resource, the target node corresponding to the another service, to generate a scheduling policy indicating the target node corresponding to the another service. A process of determining the target node corresponding to the another service is similar to a process of determining the target node corresponding to the traffic block shown in the foregoing embodiment. For details, refer to the related descriptions. Details are not described herein again. Then, the scheduling device delivers the scheduling policy of the another service to an edge cloud platform, and starts a deployment procedure of the another service, to complete scheduling of the another service to the target node corresponding to the another service. A deployment manner of the another service is not limited in this embodiment of this application. For example, the computing unit of the computing service may use an open-source container orchestration engine (kubernetes, K8s) to implement automatic deployment.

In conclusion, according to the traffic scheduling method provided in this embodiment of this application, the traffic is divided into traffic blocks with stable sizes within the reference time, so that the traffic scheduling and the scheduling of the another service are completed by one scheduling device. The scheduling device has a general scheduling capability. Because the scheduling device can schedule both the traffic and the another service, the computing resource of the target node is allocated by the same scheduling device to the traffic service and the another service, and the scheduling device can comprehensively learn of computing resource usage of each type of service, thereby improving rationality of computing resource allocation, avoiding a waste and overload use of the computing resource of the computing node, improving resource utilization of the computing resource, and reducing resource costs.

In addition, one scheduling system performs multi-service scheduling, so that a reuse rate of a computing resource between different services can be greatly increased, and a burst of a single service can be processed in a timely manner. This avoids a computing resource conflict between a plurality of services, and improves quality of the service carried on the computing node. According to the traffic scheduling method in this application, the computing node can carry more services with a same computing resource, to effectively reduce costs of carrying the service on the computing node.

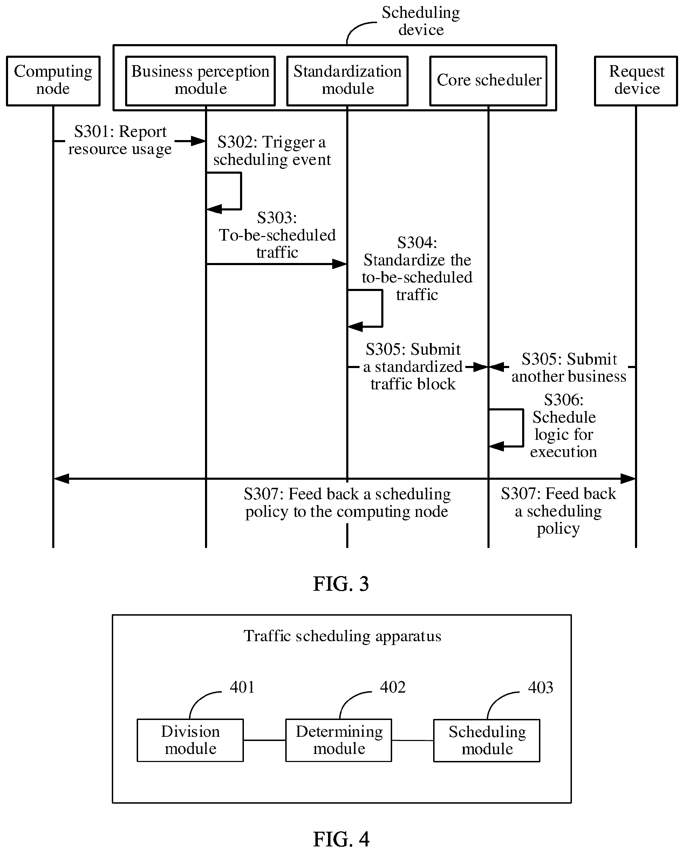

FIG. 3 is a flowchart of a traffic scheduling method according to an embodiment of this application. An example in which a scheduling device includes a service perception module, a standardization module, and a core scheduler is used to show an interaction process between a computing node, the scheduling device, and a request device. The request device is configured to process a scheduling request of another service. The another service is, for example, a computing service.

S301: The computing node reports resource usage to the service perception module.

Optionally, a communication connection may be established between the computing node and the scheduling device in a wired or wireless network manner. Each computing node sends, based on the communication connection, the resource usage to the service perception module included in the scheduling device.

S302: The service perception module triggers a scheduling event based on the resource usage.

When the resource usage indicates that no computing node is abnormal, the scheduling device repeats the operation in S301, and performs abnormality detection on each computing node by receiving the resource usage reported by the computing node. For example, when the resource usage indicates that any computing node is abnormal, the service perception module triggers the scheduling event. Scheduling the triggering event refers to starting to schedule traffic carried on the any computing node. In a possible implementation, a process of triggering the scheduling event based on the resource usage is similar to a process of obtaining the to-be-scheduled traffic based on the resource usage shown in S201 in the embodiment shown in FIG. 2. Refer to the related descriptions. Details are not described herein again.

S303: After triggering the scheduling event, the service perception module sends to-be-scheduled traffic to the standardization module.

For example, the service perception module determines, as the to-be-scheduled traffic, the traffic carried on the any computing node that is abnormal and that is detected in S302, extracts the traffic carried on the any computing node, and sends the traffic to the standardization module.

S304: The standardization module standardizes the to-be-scheduled traffic.

Standardization processing on the to-be-scheduled traffic includes but is not limited to: dividing the traffic into traffic blocks with stable sizes within reference time, and determining computing requirements of the traffic blocks. In a possible case, a process in which the standardization module standardizes the to-be-scheduled traffic is similar to processes in which the to-be-scheduled traffic is divided and the computing requirements of the traffic blocks are determined shown in S201 and S202 in the embodiment shown in FIG. 2. Refer to the related descriptions. Details are not described herein again. The traffic is standardized, so that a traffic service can be converted into a common service model that can be identified by K8s of a cloud native platform. In this way, the traffic and the another service can be scheduled by the same scheduling device.

S305: The standardization module submits a standardized traffic block to the core scheduler, and the request device submits the another service to the core scheduler.

For example, the standardized traffic block is to-be-scheduled traffic obtained through standardization processing in S304, that is, a traffic block whose computing requirement has been determined. The scheduling device not only can perform traffic scheduling, but also can implement scheduling of the another service like a computing unit. Therefore, the core scheduler further receives another to-be-scheduled service sent by the request device, to schedule the another service to the computing node. A process in which the request device submits the another service to the core scheduler is similar to a process in which the request device submits the another service to the scheduling device in S203 in the embodiment shown in FIG. 2. Refer to the related descriptions. Details are not described herein again.

S306: The core scheduler schedules logic for execution.

For example, that the core scheduler schedules the logic for the execution includes: The core scheduler schedules the standardized traffic block and schedules the another service. Optionally, a process in which the core scheduler schedules the standardized traffic block is similar to a process in which the scheduling device schedules the traffic block in S203 shown in FIG. 2, and includes determining a target node corresponding to the traffic block and scheduling the traffic block to the corresponding target node. A process in which the core scheduler schedules the another service is similar to a process in which the scheduling device schedules the another service in S203 shown in FIG. 2, and includes a process of determining a target node corresponding to the another service and a process of scheduling the another service to the corresponding target node. Refer to the related descriptions. Details are not described herein again.

In addition, for a case in which the core scheduler needs to determine the target node corresponding to the traffic block and the target node corresponding to the another service, the core scheduler may choose to synchronously determine the target node, or may choose to asynchronously determine the target node. An asynchronously determining process may be that the target node corresponding to the traffic block is first determined, and then, the target node corresponding to the another service is determined. Alternatively, an asynchronously determining process may be that the target node corresponding to the another service is first determined, and then, the target node corresponding to the traffic block is determined, or the target node corresponding to the traffic block and the target node corresponding to the another service are alternately determined.

S307: The core scheduler separately feeds back a scheduling policy to the computing node and the request device.

For example, the scheduling policy refers to the target node that corresponds to the traffic block and that is determined by the core scheduler or the target node that corresponds to the another service and that is determined by the core scheduler. A process in which the core scheduler feeds back the scheduling policy to the computing node is similar to a process in which the traffic is scheduled to the target node in S203 in the embodiment shown in FIG. 2. Refer to the related descriptions. Details are not described herein.

The foregoing describes the traffic scheduling methods in embodiments of this application. Corresponding to the foregoing methods, embodiments of this application further provide a traffic scheduling apparatus. FIG. 4 is a diagram of a structure of a traffic scheduling apparatus according to an embodiment of this application. Based on the following plurality of modules shown in FIG. 4, the traffic scheduling apparatus shown in FIG. 4 can perform all or a part of the operations shown in FIG. 2. It should be understood that the apparatus may include more additional modules than the shown modules, or a part of the shown modules are omitted. This is not limited in this embodiment of this application. As shown in FIG. 4, the apparatus is used in a scheduling device that provides a cloud service. The apparatus includes:
a division module 401, configured to: obtain to-be-scheduled traffic, and divide the traffic into a plurality of traffic blocks;
a determining module 402, configured to determine a computing requirement of each of the plurality of traffic blocks; and
a scheduling module 403, configured to schedule, based on the computing requirement of each traffic block, each traffic block to a target node corresponding to each traffic block, where a computing resource of the target node is used to process a service of the traffic block corresponding to the target node, and the computing resource of the target node is further used to process another service that is different from the traffic block and that is scheduled by the scheduling device.

In a possible implementation, the division module 401 is configured to: obtain resource usage of each of a plurality of computing nodes; and use, as the to-be-scheduled traffic based on that resource usage of any computing node in the plurality of computing nodes indicates that the any computing node is abnormal, traffic carried on the any computing node, where the any computing node and the target node are different computing nodes.

In a possible implementation, the determining module 402 is further configured to determine, based on at least one of the following: the resource usage of the any computing node indicates that a size of traffic exceeds a first threshold of the any computing node, or usage of a data processing unit of the any computing node exceeds a second threshold of the any computing node, that the any computing node is abnormal.

In a possible implementation, the division module 401 is configured to: determine a reference quantity according to a parsing protocol corresponding to the traffic; and divide traffic in a same region into the reference quantity of traffic blocks.

In a possible implementation, the determining module 402 is configured to: obtain a node region requirement and a computing resource requirement of each traffic block, and use the node region requirement and the computing resource requirement as the computing requirement.

In a possible implementation, the determining module 402 is configured to: construct a region label corresponding to each traffic block, where the region label corresponding to the traffic block indicates a region in which a computing node corresponding to the traffic block is located; and use an affinity relationship between each traffic block and the region label corresponding to each traffic block as the node region requirement of each traffic block, where the affinity relationship is used to determine a region to which the traffic block needs to be scheduled.

In a possible implementation, the region label includes at least one of an area label and an operator label.

In a possible implementation, the computing resource requirement includes at least one of a bandwidth requirement, a memory requirement, and a data processing unit requirement.

In a possible implementation, the computing requirement of each traffic block includes the node region requirement and the computing resource requirement, and the scheduling module 403 is configured to: for any traffic block, screen a schedulable computing node based on a computing requirement of the any traffic block, to obtain a selected computing node, where resource usage of the selected computing node meets a computing resource requirement of the any traffic block, and region information of the selected computing node meets a node region requirement of the any traffic block; select a computing node from the selected computing node as a target node corresponding to the any traffic block; and schedule the any traffic block to the target node corresponding to the any traffic block.

In a possible implementation, the another service includes at least one of a computing service and a storage service.

In a possible implementation, the target node is an edge node.

The apparatus divides traffic into the plurality of traffic blocks, and then determines a computing requirement of each traffic block, so that traffic scheduling and scheduling of another service can be completed by one scheduling device. The scheduling device has a general scheduling capability. Because the scheduling device can schedule both the traffic and the another service, a same scheduling device allocates the computing resource of the target node to a traffic service and the another service, thereby improving rationality of computing resource allocation, avoiding a waste and overload use of the computing resource of the computing node, and improving resource utilization of the computing resource.

The division module 401, the determining module 402, and the scheduling module 403 may all be implemented by using software or hardware. For example, the following uses the division module 401 as an example to describe an implementation of the division module 401. Similarly, for implementations of the determining module 402 and the scheduling module 403, refer to the implementation of the division module 401.

A module is used as an example of a software functional unit, and the division module 401 may include code run on a computing instance. The computing instance may include at least one of a physical host (a computing device), a virtual machine, or a container. Further, there may be one or more computing instances. For example, the division module 401 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented via the communication gateway.

A module is used as an example of a hardware functional unit, and the division module 401 may include at least one computing device, for example, a server. Alternatively, the division module 401 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the division module 401 may be distributed in a same region, or may be distributed in different regions. The plurality of computing devices included in the division module 401 may be distributed in a same AZ, or may be distributed in different AZs. Similarly, the plurality of computing devices included in the division module 401 may be distributed in a same VPC, or may be distributed in a plurality of VPCs. The plurality of computing devices may be any combination of computing devices such as a server, an ASIC, a PLD, a CPLD, an FPGA, and GAL.

It should be noted that in another embodiment, the division module 401 may be configured to perform any step in the traffic scheduling method, the determining module 402 may be configured to perform any step in the traffic scheduling method, and the scheduling module 403 may be configured to perform any step in the traffic scheduling method. Steps that the division module 401, the determining module 402, and the scheduling module 403 are responsible for implementing may be specified as required. The division module 401, the determining module 402, and the scheduling module 403 respectively implement different steps in the traffic scheduling method, to implement all functions of the traffic scheduling apparatus.

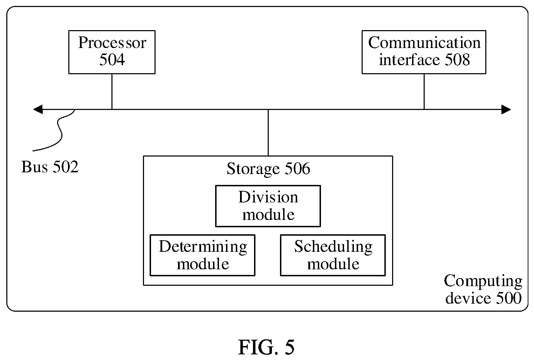

This application further provides a computing device 500. Optionally, the computing device 500 is a scheduling device according to an embodiment of this application. As shown in FIG. 5, the computing device 500 includes a bus 502, a processor 504, a storage 506, and a communication interface 508. The processor 504, the storage 506, and the communication interface 508 communicate with each other through the bus 502. The computing device 500 may be a server or a terminal device. It should be understood that quantities of processors and storages of the computing device 500 are not limited in this application.

The bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 5, but it does not mean that there is only one bus or only one type of bus. The bus 502 may include a path for information transmission between components (for example, the storage 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 506 may include a volatile memory (volatile memory), for example, a random access memory (random access memory, RAM). The processor 504 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 506 stores executable program code, and the processor 504 executes the executable program code to separately implement functions of the foregoing obtaining module, determining module, and grouping module, to implement a traffic scheduling method. That is, the storage 506 stores instructions used to perform the traffic scheduling method.

The communication interface 508 uses a transceiver module, for example, but not limited to, a network interface card or a transceiver, to implement communication between the computing device 500 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of the at least one computing device included in the computing device cluster, refer to the computing device 500 shown in FIG. 5. The storage 506 in one or more computing devices 500 in the computing device cluster may store same instructions used to perform the traffic scheduling method.

In some possible implementations, the storage 506 in one or more computing devices 500 in the computing device cluster may store a part of instructions used to perform the traffic scheduling method. In other words, a combination of the one or more computing devices 500 may jointly perform the instructions used to perform the traffic scheduling method.

It should be noted that storages 506 in different computing devices 500 in the computing device cluster may store different instructions, respectively used to perform a part of functions of a resource scheduling apparatus. To be specific, the instructions stored in the storages 506 in the different computing devices 500 may implement a function of one or more modules of a division module, a determining module, and a scheduling module.

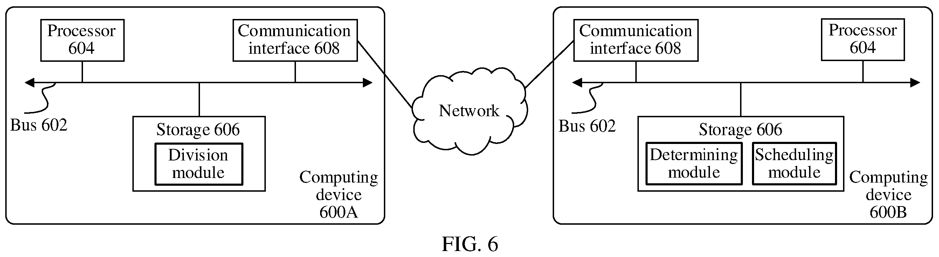

In some possible implementations, the one or more computing devices in the computing device cluster may be connected via a network. The network may be a wide area network, a local area network, or the like. FIG. 6 shows a possible implementation. As shown in FIG. 6, two computing devices 600A and 600B are connected via a network. Specifically, the computing devices are connected to the network through communication interfaces of the computing devices. In this possible implementation, the computing devices 600A and 600B include a bus 602, a processor 604, a storage 606, and a communication interface 608. The storage 606 in the computing device 600A stores instructions for performing a function of a division module. In addition, the storage 606 in the computing device 600B stores instructions for performing functions of a determining module and a scheduling module.

A connection manner of a computing device cluster shown in FIG. 6 may be that considering that in a traffic scheduling method provided in this application, a traffic block obtained through traffic division needs to be scheduled to a target node corresponding to the traffic block, it is considered that the functions implemented by the determining module and the scheduling module are performed by the computing device 600B.

It should be understood that a function of the computing device 600A shown in FIG. 6 may also be completed by a plurality of computing devices 600. Similarly, a function of the computing device 600B may also be completed by a plurality of computing devices 600.

An embodiment of this application further provides a communication apparatus. The apparatus includes a transceiver, a storage, and a processor. The transceiver, the storage, and the processor communicate with each other through an internal connection path. The storage is configured to store instructions. The processor is configured to execute the instructions stored in the storage, to control the transceiver to receive a signal and control the transceiver to send a signal. In addition, when the processor executes the instructions stored in the storage, the processor is enabled to perform a traffic scheduling method.

It should be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the storage may include a read-only memory and a random access memory, and provide instructions and data for the processor. The storage may further include a non-volatile random access memory. For example, the storage may further store information about a device type.

The storage may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer program (product) including instructions. The computer program (product) may be a software or program product that includes instructions and that can be run on a computing device or stored in any usable medium. When the computer program (product) runs on at least one computing device, the at least one computing device is enabled to perform the traffic scheduling method provided in embodiments of this application.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the traffic scheduling method.

An embodiment of this application further provides a chip, including a processor, configured to: invoke, from a storage, and run instructions stored in the storage, to enable a communication device in which the chip is installed to perform the traffic scheduling method provided in embodiments of this application.

An embodiment of this application further provides another chip, including an input interface, an output interface, a processor, and a storage. The input interface, the output interface, the processor, and the storage are connected through an internal connection path. The processor is configured to execute code in the storage. When the code is executed, the processor is configured to perform the traffic scheduling method provided in embodiments of this application.

All or a part of the foregoing embodiments may be implemented by using software, hardware, firmware, or any combination thereof. When the software is used to implement embodiments, all or the part of embodiments may be implemented in a form of a computer program product. The computer program product includes one or more computer instructions. When the computer program instructions are loaded and executed on a computer, procedures or functions shown according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive)), or the like.

To clearly describe the interchangeability of hardware and software, the steps and composition of embodiments have been generally described in the foregoing descriptions in terms of functions. Whether the functions are performed by the hardware or the software depends on particular applications and design constraints of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable rule search apparatus, so that when the program code is executed by the computer or the another programmable rule search apparatus, functions/operations specified in the flowcharts and/or block diagrams are implemented. The program code may be executed entirely on the computer, partly on the computer, as a standalone software package, partly on the computer and partly on a remote computer, or entirely on a remote computer or a server.

In the context of embodiments of this application, computer program code or related data may be carried on any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It can be clearly understood by a person skilled in the art that, for convenient and brief description, for a specific operating process of the foregoing system, device, and module, refer to a corresponding process in the foregoing method embodiments. Details are not described herein again.

In the several embodiments provided in this application, it should be understood that the disclosed system, device, and method may be implemented in other manners. For example, the device embodiment described above is merely an example. For example, division of the modules is merely division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. A part or all of the modules may be selected based on an actual requirement to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should further be understood that although the following descriptions use the terms such as "first" and "second" to describe various elements, these elements should not be limited by the terms. These terms are merely used to distinguish one element from another. For example, without departing from the scope of the various examples, a first link may be referred to as a second link, and similarly, the second link may be referred to as the first link.

It should be further understood that in embodiments of this application, sequence numbers of processes do not mean execution sequences. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second packets means two or more second packets. The terms "system" and "network" are often used interchangeably in this specification.

It should be understood that the terms used in the descriptions of various examples in this specification are merely intended to describe specific examples but are not intended to constitute a limitation. For example, the terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should also be understood that, depending on the context, the phrase "if it is determined..." or "if [a stated condition or event] is detected" may be interpreted to mean "when it is determined that ..." or "in response to determining ..." or "when [the stated condition or event] is detected" or "in response to the detection of [the stated condition or event]".

It should be understood that determining B based on A does not mean that B is determined based only on A, and B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment", "in an embodiment", or "a possible implementation" appearing throughout the specification may not necessarily refer to a same embodiment. In addition, these particular features, structures, or characteristics may be combined in one or more embodiments in any appropriate manner.

It should be noted that information (including but not limited to user equipment information, user personal information, and the like), data (including but not limited to data used for analysis, stored data, displayed data, and the like), and signals in this application are used under authorization by a user or full authorization by all parties, and capturing, use, and processing of related data need to conform to related laws, regulations, and standards of related countries and areas. For example, the to-be-scheduled traffic and the like in this application are all obtained under full authorization.

Finally, it should be noted that the foregoing embodiments are merely intended to describe the technical solutions of this application, but not to limit the technical solutions of this application. Although this application is described in detail with reference to the foregoing embodiments, a person of ordinary skill in the art should understand that modifications can still be made to the technical solutions described in the foregoing embodiments or equivalent replacements can be made to some technical features thereof. However, these modifications and replacements do not make the essence of the corresponding technical solutions depart from the protection scope of the technical solutions of embodiments of this application.

## Claims

1. A traffic scheduling method, wherein the method is performed by a scheduling device that provides a cloud service, and the method comprises:
obtaining, by the scheduling device, to-be-scheduled traffic, and dividing the traffic into a plurality of traffic blocks;
determining, by the scheduling device, a computing requirement of each of the plurality of traffic blocks; and
scheduling, by the scheduling device based on the computing requirement of each traffic block, each traffic block to a target node corresponding to each traffic block, wherein a computing resource of the target node is used to process a service of the traffic block corresponding to the target node, and the computing resource of the target node is further used to process another service that is different from the traffic block and that is scheduled by the scheduling device.

2. The method according to claim 1, wherein the obtaining to-be-scheduled traffic comprises:
obtaining resource usage of each of a plurality of computing nodes; and
using, as the to-be-scheduled traffic based on that resource usage of any computing node in the plurality of computing nodes indicates that the any computing node is abnormal, traffic carried on the any computing node, wherein the any computing node and the target node are different computing nodes.

3. The method according to claim 2, wherein before the using, as the to-be-scheduled traffic based on that resource usage of any computing node in the plurality of computing nodes indicates that the any computing node is abnormal, traffic carried on the any computing node, the method further comprises:
determining, based on at least one of the following: the resource usage of the any computing node indicates that a size of traffic exceeds a first threshold of the any computing node, or usage of a data processing unit of the any computing node exceeds a second threshold of the any computing node, that the any computing node is abnormal.

4. The method according to any one of claims 1 to 3, wherein the dividing the traffic into a plurality of traffic blocks comprises:
determining a reference quantity according to a parsing protocol corresponding to the traffic; and
dividing traffic in a same region into the reference quantity of traffic blocks.

5. The method according to any one of claims 1 to 4, wherein the determining a computing requirement of each of the plurality of traffic blocks comprises:
obtaining a node region requirement and a computing resource requirement of each traffic block, and using the node region requirement and the computing resource requirement as the computing requirement.

6. The method according to claim 5, wherein the obtaining a node region requirement of each traffic block comprises:
constructing a region label corresponding to each traffic block, wherein the region label corresponding to the traffic block indicates a region in which a computing node corresponding to the traffic block is located; and
using an affinity relationship between each traffic block and the region label corresponding to each traffic block as the node region requirement of each traffic block, wherein the affinity relationship is used to determine a region to which the traffic block needs to be scheduled.

7. The method according to claim 6, wherein the region label comprises at least one of an area label and an operator label.

8. The method according to any one of claims 5 to 7, wherein the computing resource requirement comprises at least one of a bandwidth requirement, a memory requirement, and a data processing unit requirement.

9. The method according to any one of claims 1 to 8, wherein the computing requirement of each traffic block comprises the node region requirement and the computing resource requirement, and the scheduling, based on the computing requirement of each traffic block, each traffic block to a target node corresponding to each traffic block comprises:
for any traffic block, screening a schedulable computing node based on a computing requirement of the any traffic block, to obtain a selected computing node, wherein resource usage of the selected computing node meets a computing resource requirement of the any traffic block, and region information of the selected computing node meets a node region requirement of the any traffic block;
selecting a computing node from the selected computing node as a target node corresponding to the any traffic block; and
scheduling the any traffic block to the target node corresponding to the any traffic block.

10. The method according to any one of claims 1 to 9, wherein the another service comprises at least one of a computing service and a storage service.

11. The method according to any one of claims 1 to 10, wherein the target node is an edge node.

12. A traffic scheduling apparatus, wherein the apparatus is used in a scheduling device that provides a cloud service, and the apparatus comprises:
a division module, configured to: obtain to-be-scheduled traffic, and divide the traffic into a plurality of traffic blocks;
a determining module, configured to determine a computing requirement of each of the plurality of traffic blocks; and
a scheduling module, configured to schedule, based on the computing requirement of each traffic block, each traffic block to a target node corresponding to each traffic block, wherein a computing resource of the target node is used to process a service of the traffic block corresponding to the target node, and the computing resource of the target node is further used to process another service that is different from the traffic block and that is scheduled by the scheduling device.

13. The apparatus according to claim 12, wherein the division module is configured to: obtain resource usage of each of a plurality of computing nodes; and use, as the to-be-scheduled traffic based on that resource usage of any computing node in the plurality of computing nodes indicates that the any computing node is abnormal, traffic carried on the any computing node, wherein the any computing node and the target node are different computing nodes.

14. The apparatus according to claim 13, wherein the determining module is further configured to determine, based on at least one of the following: the resource usage of the any computing node indicates that a size of traffic exceeds a first threshold of the any computing node, or usage of a data processing unit of the any computing node exceeds a second threshold of the any computing node, that the any computing node is abnormal.

15. The apparatus according to any one of claims 12 to 14, wherein the division module is configured to: determine a reference quantity according to a parsing protocol corresponding to the traffic; and divide traffic in a same region into the reference quantity of traffic blocks.

16. The apparatus according to any one of claims 12 to 15, wherein the determining module is configured to: obtain a node region requirement and a computing resource requirement of each traffic block, and use the node region requirement and the computing resource requirement as the computing requirement.

17. The apparatus according to claim 16, wherein the determining module is configured to:
construct a region label corresponding to each traffic block, wherein the region label corresponding to the traffic block indicates a region in which a computing node corresponding to the traffic block is located; and use an affinity relationship between each traffic block and the region label corresponding to each traffic block as the node region requirement of each traffic block, wherein
the affinity relationship is used to determine a region to which the traffic block needs to be scheduled.

18. The apparatus according to claim 17, wherein the region label comprises at least one of an area label and an operator label.

19. The apparatus according to any one of claims 16 to 18, wherein the computing resource requirement comprises at least one of a bandwidth requirement, a memory requirement, and a data processing unit requirement.

20. The apparatus according to any one of claims 12 to 19, wherein the computing requirement of each traffic block comprises the node region requirement and the computing resource requirement, and the scheduling module is configured to: for any traffic block, screen a schedulable computing node based on a computing requirement of the any traffic block, to obtain a selected computing node, wherein resource usage of the selected computing node meets a computing resource requirement of the any traffic block, and region information of the selected computing node meets a node region requirement of the any traffic block; select a computing node from the selected computing node as a target node corresponding to the any traffic block; and schedule the any traffic block to the target node corresponding to the any traffic block.

21. The apparatus according to any one of claims 12 to 20, wherein the another service comprises at least one of a computing service and a storage service.

22. The apparatus according to any one of claims 12 to 21, wherein the target node is an edge node.

23. A computing device cluster, wherein the computing device cluster comprises at least one computing device, and each computing device comprises a processor and a storage; and the processor of the at least one computing device is configured to execute instructions stored in the storage of the at least one computing device, to enable the computing device cluster to perform the traffic scheduling method according to any one of claims 1 to 11.

24. A computer-readable storage medium, wherein the computer-readable storage medium comprises computer program instructions, and when the computer program instructions are executed by a computing device cluster, the computing device cluster performs the traffic scheduling method according to any one of claims 1 to 11.
